# NEW EUROPEAN PATENT SPECIFICATION

(11) **EP 2 903 448 B2**
(45) Date of publication and mention of the opposition decision: **22.07.2026**
(45) Mention of the grant of the patent: 18.08.2021
(21) Application number: 13777432.9
(22) Date of filing: 04.10.2013
(51) Int. Cl.: A23G 3/54, A23G 3/20

(54) **HARD CONFECTIONARY AND METHOD OF MANUFACTURE THEREOF**
HARTE SÜSSWAREN UND VERFAHREN ZUR HERSTELLUNG DAVON
CONFISERIE DURE ET SON PROCÉDÉ DE FABRICATION

(30) Priority: 08.10.2012 US 201261710915 P
(43) Date of publication of application: 12.08.2015
(73) Proprietor: Intercontinental Great Brands LLC, East Hanover, NJ 07936 (US)
(72) Inventor: COTTEN, Gerald, Whippany, New Jersey 07981 (US); VALAND, Khyati, Whippany, New Jersey 07981 (US); OPET, Mary, Whippany, New Jersey 07981 (US); DOHERTY, Janine, Whippany, New Jersey 07936 (US); WELBORN, Laurie, East Hanover New Jersey 07936 (US); CORREA, Beth, East Hanover , New Jersey 07936 (US)
(74) Representative: Boult Wade Tennant LLP
(86) International application number: PCT/US2013/063460
(87) International publication number: WO 2014/058732

(56) References cited:
- EP-A1- 0 447 733
- WO-A1-2006/077480
- WO-A1-97/03569
- WO-A2-2005/102066
- CN-U- 201 528 639
- US-A- 4 517 205
- US-A1- 2004 191 402
- US-A1- 2012 171 335

## Description

### BACKGROUND

Hard candies, i.e., confectionaries, are typically made from a single hard candy composition having a single flavor profile. As a result, during consumption of the confectionary, the consumer is subjected to a homogeneous flavor experience. For example US2004/191402 discloses a jacketed hard candy product comprising a core made of a boiled hard candy containing one or more flavoring and cooling agents; and an outer layer also made of a boiled hard candy. CN201528639 teaches a hard candy, which comprises an integrated formed hard candy body.

There is therefore a demand for hard candies that provide the consumer with a greater sense of enjoyment. In particular, products having improved taste and which provide a noticeable change in flavor during the course of consumption are desired by the consumer. Such compositions would provide a greater sense of anticipation and pleasure for the consumer as the hard confectionary transitions between flavors during consumption of the hard confectionary.

In addition to consumption purely for enjoyment, hard candies are often used by consumers to assuage the discomfort of a sore throat. The most common ingredient in such compositions is menthol, which is sometimes used in combination with eucalyptus oil. However, concentrations of menthol that are effective for soothing sore throats are also accompanied by bitterness. Menthol-containing hard confectionary compositions that possess a balance between taste and cooling, and for which bitterness and aftertaste is minimized, would be of value to the consumer.

There is therefore a desire for hard confectionary compositions that provide a balanced, multi-flavor experience. It would be a further advantage if the hard confectionaries could be manufactured to have minimal bitterness and/or undesired aftertaste.

### BRIEF DESCRIPTION OF THE INVENTION

Disclosed herein are multi-region hard confectionaries providing a multi-flavor experience.

The invention is defined in the claims appended hereto.

The above described and other features are exemplified by the following figures and detailed description.

### BRIEF DESCRIPTION OF THE FIGURES

Like elements are numbered alike in the following Figures, which are not meant to be limiting.
Figure 1 shows a schematic cross-sectional representation of an embodiment of the multi-region hard confectionary described herein.
Figure 2 shows a schematic cross-sectional representation of another embodiment of the multi-region hard confectionary described herein.
Figure 3 shows a schematic cross-sectional representation of an embodiment of the multi-region hard confectionary described herein.
Figure 4 shows a schematic cross-sectional representation of an embodiment of the multi-region hard confectionary described herein.

### DETAILED DESCRIPTION

Multi-region hard confectionaries having multiple hard confectionary regions are described, wherein at least two of the regions provide a distinct flavor profile to the consumer. In particular, the multi-region hard confectionary has an outer region and an inner region. The outer region at least partially dissolves within the mouth of the consumer prior to the dissolution of the inner region(s). As each region of hard confectionary dissolves, a new flavor is released. As such, the consumer experiences a transformation in flavors while consuming the multi-region confectionary resulting in a unique and enjoyable multi-sensory experience.

In particular, the multi-region hard confectionary includes a colored or a substantially colorless outer region having a composition that provides a flavor profile and a colored inner region having a different composition that provides a flavor profile distinct from that of the outer region. In instances where the outer region is substantially colorless, the outer region and the inner region are thus visually separate and distinct hard confectionary compositions also having differing flavor profiles. Due to the different flavorants present in each of the regions, the multi-region hard confectionary provides a transition from a first flavor profile (from the outer region) to a second flavor profile (from a combination of the outer region and the inner region) to a third flavor profile (from the inner region) when the multi-region hard confectionary is consumed, thereby resulting in a multisensory experience. In particular, as the multi-region hard confectionary transitions between flavors, a more interesting and invigorating flavor experience is provided to the consumer.

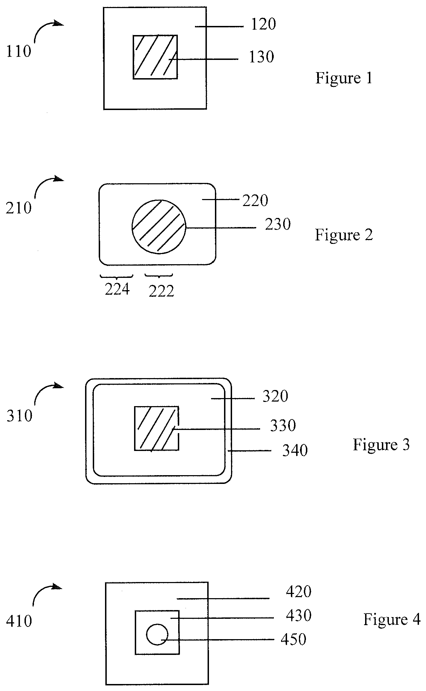

An embodiment of the multi-region hard confectionary is shown in Figure 1. Multi-region hard confectionary 110 comprises a colored or a substantially colorless outer region 120 and a colored inner region 130, where both regions are hard confectionary compositions providing different flavor profiles as discussed in further detail below. As used herein, the term "outer region" refers to a region of the confectionary that substantially surrounds and is exterior to an inner region, and the term "inner region" refers to a region of the confectionary that is interior to and substantially surrounded by an outer region. As used herein, the terms "surround," "surrounding," and the like, are not limited to encircling. These terms can refer to partially or fully enclosing or confining on all sides, encircling or enveloping, and are not limited to symmetrical or identical thicknesses for a region in the confectionary product. Further as used herein, "substantially surround[s]" and the like means that the outer region covers greater than 90%, specifically greater than 95%, more specifically greater than 98%, and even more specifically greater than 99% of the outer surface area of the inner region, up to 100% of the outer surface area of the inner region. In some embodiments, the outer region fully surrounds the inner region, such that 100% of the outer surface area of the inner region is surrounded. Thus, as used herein, the term "fully surround(ing)" refers to a region of hard confectionary that covers 100% of the surface area of a separate and distinct region of hard confectionary.

The outer region 130 can be substantially colorless and the inner region 130 can be colored to an extent effective to allow the consumer to readily distinguish the outer region and the inner region. "Substantially colorless" as used herein includes compositions that are lightly tinted or completely colorless. The outer region is at least translucent under normal daylight conditions, and in an embodiment is substantially transparent to the consumer under normal daylight conditions. In an embodiment the outer region is colorless and substantially transparent. The inner region is sufficiently colored to allow the inner region to be visually distinguished from the outer region by the consumer under normal daylight conditions. The inner region can be translucent or opaque. In an embodiment, the outer region is colorless and substantially transparent, and the inner region is colored and opaque.

In other embodiments, the outer region can be colored in a manner such that the consumer is unable to readily distinguish the inner region from the outer region. For example, the color of the outer region can be substantially the same as the color in the inner region. Alternatively, the outer region can be opaque. In instances where the consumer is unable to visually distinguish the inner region from the outer region, the transition between one flavor profile and another cannot be visualized and thus is unexpected, resulting in a surprising flavor experience.

The outer region 120 and the inner region 130 can be of any shape, provided that the outer region substantially surrounds the inner region. For example, the inner region, the outer region, or both can be spherical, cubical, rectangular, rhomboidal, trapezoidal, conical, frustoconical, or the like, or irregular. In a specific embodiment the outer region 120 and the inner region 130 have a similar shape, for example cubical as shown in Figure 1.

The relative amounts of the outer region and the inner region, as well as the thickness of the outer region are adjusted to provide visibility to the substantially colorless outer region, and a sequential multi-sensory experience, i.e., a transition from a first flavor profile (from the outer region) to a second flavor profile (from a combination of the outer region and the inner region) to a third flavor profile (from the inner region) when the multi-region hard confectionary is consumed. It has been unexpectedly found that a multi-regional confectionary comprising 20% or more by weight, specifically 50% or more by weight, 60% or more by weight, 70% or more by weight, or 80% or more by weight of the outer region 120, and 80% or less by weight, specifically 50% or less by weight, 40% or less by weight, 30% or less by weight, or 20% or less by weight of the inner region 130, provides the desired sequential multi-flavor profile, wherein each of the foregoing amounts are based on the total weight of the outer region and the inner region. In some embodiments, the multi-region confectionery comprises 70% or more by weight of the outer region and 30% or less by weight of the inner region, based on the total weight of the outer and inner region.

In other words, the weight ratio of the outer region 120 to the inner region 130 can be 90:10 to 20:80. In various embodiments, the ratio of the outer region to the inner region can be 80:20 to 40:60, or 80:20 to 50:50, or 80:20 to 60:40. In some embodiments, the weight ratio of the outer region 120 to the inner region 130 is 70:30. By maintaining these weight ratios, both the desired appearance and taste profiles can be achieved. Lower amounts of the outer region 120 does not allow ready visualization of the inner region when the outer region is substantially colorless. Additionally, lower amounts of the inner region does not provide a distinct third taste profile.

For example, when the confectionary contains only the outer region and the inner region, the outer region 120 is present in the multi-region hard confectionary in an amount of 20% to 90% by weight, 40% to 80% by weight, or 60% to 80 % by weight, and the inner region is correspondingly present in an amount of 10% to 80% by weight, 20% to 60% by weight, or 20% to 40% by weight, each of the foregoing being based on the total weight of the confectionary. In one embodiment, the outer region is present in an amount of 70% by weight and the inner region is present in an amount of 30% by weight, based on the total weight of the multi-region confectionery.

The thickness of the outer region 120 as measured from the edge of the inner layer 130, can be of uniform thickness, as shown in Figure 1, or variable thickness, as illustrated in Figure 2. In Figure 2, the multi-region hard confectionary 210 comprises a rectangular outer region 220 and a spherical inner region 230. The outer region 220 thus comprises an area of reduced thickness 222 when measured from the edge of the inner layer 230 as compared to another area of the outer region 224. However, the outer layer can be configured to provide a thickness sufficient for the outer region to be visually distinguishable from the inner region when the outer region is substantially transparent, and sufficient to provide the first flavor profile distinguishable from the second flavor profile by the consumer. The outer region 230 accordingly has a minimum thickness of at least 2.0 mm.

Simultaneously, the outer layer is configured to allow development of the third flavor profile, i.e., to provide complete dissolution of the outer region before complete dissolution of the inner region. The inner region is designed to have a minimum thickness of at least 5 mm.

In some embodiments, the outer region is disposed on and in direct contact with at least a portion of the inner region to form an interface between the inner region and the outer region. In some embodiments, the interface is visible to the consumer under ordinary daylight conditions without magnification. In these embodiments there is substantially no intermixing between the hard confectionary composition of the outer region and the hard confectionary composition of the inner region at the interface between the outer region and the inner region. All outer surfaces of the inner region can be in contact with the outer region to form an interface between the outer region and the inner region, wherein the interface is visible to the consumer under ordinary daylight conditions without magnification.

In some embodiments, the multi-region hard confectionary comprises one or more additional discrete hard confectionary regions, provided that such additional region or regions do not significantly adversely affect the visual or sequential taste profile characteristics of the confectionary. The composition of the additional region or regions can provide a flavor profile that is different from, or the same as, the first, second, or third flavor profiles. For example, as shown in Figure 3, the multi-region hard confectionary 310 comprises an additional outermost hard confectionary region 340 disposed on and in contact with the outer region 320. The additional outermost region 340 can be substantially colorless and translucent, specifically transparent. The additional outermost region 340 can be continuous as shown or discontinuous (not shown) and can function to provide an additional flavor profile or to modify the first flavor profile. When the additional outermost region 340 provides an additional continuous flavor profile, the additional region is present in an amount of at least 10% by weight, specifically at least 20% by weight, more specifically at least 30% by weight, even more specifically at least 50% by weight, based on the total weight of the confectionary. The additional outermost region can be present in an amount of about 50 to about 85 by weight, based on the total weight of the confectionery. The additional region 340 is further configured to have a thickness of at least 0.05 mm, at least 0.5 mm, at least 1.0 mm, or at least 2 mm, and to be no thicker than the average thickness of the outer region 320.

Alternatively, as shown in Figure 4, the additional region can be disposed within the inner region. For example the multi-region hard confectionary 410 can comprise an outer region 420 and an inner region 430 as described above, together with an additional innermost region 450 disposed within and in contact with inner region 430. The additional innermost region 450 can be substantially colorless or colored, or opaque or transparent. The additional innermost region can function to provide an additional flavor profile or to modify the third flavor profile. When the additional innermost region 450 provides an additional flavor profile, the additional region is present in an amount of at least 4% by weight, specifically at least 10% by weight, based on the total weight of the confectionary. The additional innermost region can be present in an amount of 4 to 25 by weight, based on the total weight of the confectionery. The inner region 430 is further configured to have a thickness of at least 1 mm, at least 2.5 mm, or at least 5 mm, and to be no thicker than the average thickness of the innermost region 450.

In some embodiments, the multi-region hard confectionery composition comprises 50-80% by weight of an outer region, 16-25% by weight of an inner region, and 4-25% by weight of an innermost region. Alternatively, in other embodiments, the multi-region hard confectionery comprises 50-80% by weight of an additional outermost region, 16-25% by weight of an outer region, and 4-25% by weight of an inner region.

As stated above, during consumption of the confectionary, the composition of the outer region and the composition of the inner region each provide two different flavor profiles. The combination of the outer and the inner regions provides yet a different flavor profile. As used herein, the "flavor profile" refers to the overall characteristic taste, aroma, or sensory experience as perceived by the consumer. A "sensory experience" as used herein includes a cooling, heating, tingling, mouth-watering, mouth-freshening, or mouth-moistening experience. A flavor profile can therefore provide a taste, an aroma, a sensory experience, or any combination thereof. Manipulation of the flavor profiles of each of the regions allows the manufacture of hard confectionaries having novel tastes to be enjoyed by the consumer. In a particularly advantageous feature, the third flavor profile can be selected to provide a highly desirable aftertaste, which can increase the consumer's enjoyment of the confectionary. Alternatively, or in addition, the third flavor profile can be selected to mask or displace any undesired aftertaste (e.g., a bitter note) present in the first flavor profile.

The first flavor profile provides a mild fruit taste and a cooling sensory experience, and the third flavor profile provides a stronger fruit taste, and no cooling experience. This combination is especially advantageous in that it allows the manufacture of a hard confectionary where any perceived aftertaste (e.g., a bitter note) of the cooling agent is displaced or masked by the third flavor profile.

Regarding the compositions, in general, a hard confectionary composition has a hard confectionary base composed of a combination of sugar, sugar alcohols, or a combination thereof, and optionally other carbohydrate bulking agents, in an amorphous or glassy condition. These base compositions are a solid syrup of the sugars or sugar alcohols, and generally having 0.5% to 4.0% moisture. For example, a hard confectionary base can contain sucrose and glucose in amounts of up to 90% sucrose and up to 70% glucose syrup. The syrup component can be prepared using corn syrups high in fructose, but can include other materials. Additional ingredients can also be included in the confectionary base.

Sugars that can be included in the base hard confectionary composition include those selected from the group consisting of mono-saccharides, disaccharides and polysaccharides, such as but not limited to, sucrose (sugar), dextrose, maltose, dextrin, xylose, ribose, glucose, mannose, galactose, fructose (levulose), lactose, invert sugar, fructo-oligosaccharide syrups, partially hydrolyzed starch, corn syrup solids, such as high fructose corn syrup, and a combination thereof.

Sugar alcohols that can be included in the base hard confectionary composition include those selected from the group consisting of sorbitol, mannitol, xylitol, maltitol, isomalt, erythritol, hydrogenated starch hydrolysates, and the like, and a combination thereof.

Suitable hydrogenated starch hydrolysates include those disclosed in U.S. Pat. No. 4,279,931 and various hydrogenated glucose syrups and/or powders that contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{™}, a line of commercially available products manufactured by Roquette Freres of France, and HYSTAR^{™}, a line of commercially available products manufactured by Lonza, Inc., of Fairlawn, N.J., also can be useful.

The sugar or sugar alcohol can serve more than one purpose. For example, a sweetener, e.g., sucrose, sorbitol or other sugar alcohol, or a combination thereof, can also function as a bulking agent. Examples of carbohydrate bulking agents include monosaccharides, disaccharides, polysaccharides, sugar alcohols, polydextrose, maltodextrins, and a combination thereof.

A variety of additional ingredients are generally included in the hard confectionary compositions, including, for example, flavorants, high intensity sweetening agents, acidulants, sensory agents such as cooling agents, warming agents, and tingling agents, colorants, throat-soothing ingredients, medicaments, and a combination thereof.

The flavorants (also known as flavorings, flavors, or flavoring agents) include those flavors known to the skilled artisan, including natural and synthetic flavorants, for example flavoring aromatics, flavor oils, oleoresins, and extracts derived from plants, leaves, flowers, fruits, and so forth, and a combination thereof. Non-limiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, citrus oils including lemon, orange, lime, and grapefruit. Fruit essences including apple, pear, peach, grape, strawberry, raspberry, cherry, plum, pineapple, apricot, banana, melon, tropical fruit, mango, mangosteen, pomegranate, papaya, honey lemon, and a combination thereof can be used.

Other types of flavorants include various aldehydes and esters such as cinnamyl acetate, cinnamaldehyde, citral diethylacetal, dihydrocarvyl acetate, eugenyl formate, p-methylanisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), 2-dodecenal (citrus, mandarin), and a combination thereof.

Useful flavors are natural and synthetic fruit flavors, such as coconut, coffee, chocolate, vanilla, lemon, grapefruit, orange, lime, yazu, sudachi, menthol, licorice, caramel, honey, peanut, walnut, cashew, hazelnut, almonds, pineapple, strawberry, raspberry, blackberry, tropical fruits, cherries, cinnamon, peppermint, wintergreen, spearmint, eucalyptus, and mint, fruit essence such as from apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya, and a combination thereof. Specific flavors include mints such as peppermint, menthol, artificial vanilla, cinnamon derivatives, and various fruit flavors, whether employed individually or in combination.

Flavors can also provide breath freshening properties, particularly the mint flavors when used in combination with cooling agents.

The flavorants can be added to the confectionary base in a liquid and/or dried form. When used in solid (dry) form, suitable drying means such as spray drying the oil can be used. Alternatively, the flavorant can be encapsulated, absorbed onto water-soluble materials by methods known in the art, for example onto cellulose, starch, sugar, maltodextrin, gum arabic, and the like. The flavorants can be used in physical forms effective to provide an initial burst of flavor or a prolonged sensation of flavor.

A high intensity sweetener can be present in the hard confectionary compositions. The high intensity sweetener can be a wide range of materials, including water-soluble sweeteners, water-soluble artificial sweeteners, water-soluble sweeteners derived from naturally occurring water-soluble sweeteners, dipeptide based sweeteners, protein based sweeteners, and combinations thereof. Without being limited to particular sweeteners, representative categories and examples include: water-soluble sweetening agents such as dihydrochalcones, monellin, steviosides, glycyrrhizin, dihydroflavenol, and sugar alcohols such as sorbitol, mannitol, maltitol, monatin, and L-aminodicarboxylic acid aminoalkenoic acid ester amides, such as those disclosed in U.S. Pat. No. 4,619,834, or a combination comprising a of the foregoing water-soluble artificial sweeteners such as soluble saccharin salts, i.e., sodium or calcium saccharin salts, cyclamate salts, acesulfame salts, such as the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, or a combination comprising a of the foregoing; dipeptide based sweeteners, for example the L-aspartic acid derived sweeteners such as L-aspartyl-L-phenylalanine methyl ester (Aspartame) and materials described in U.S. Pat. No. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, neotame, or a combination comprising a of the foregoing; water-soluble sweeteners derived from naturally occurring water-soluble sweeteners, such as steviosides, chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro-1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro-4,6,1',6'-tetradeoxygalacto-sucrose; 4,6,1',6'-tetradeoxy-sucrose, or a combination comprising at least one of the foregoing; protein based sweeteners such as thaumaoccous danielli, talin, or a combination thereof.

Acids (also known as acidulants) can also optionally be included in the hard confectionary composition, for example food acids such as acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric acid, and a combination thereof.

Cooling agents, also known as coolants, are additives that provide a cooling or refreshing effect in the mouth, in the nasal cavity, or on skin. The cooling agent can be a traditional flavor-derived cooling agent or a physiological cooling agent. Examples of traditional flavor-derived cooling agents include menthol or menthone. Menthol (also known as 2-(2-propyl)-5-methyl-1-cyclohexanol) is a component of peppermint oil that has a cooling property, which provides to the consumer a perception of freshness in the oral cavity. Menthol is available in artificial form or derived naturally from sources such as peppermint oil.

Physiological cooling agents do not have a perceptible flavor of their own, but simply provide a cooling effect. Examples of physiological cooling agents include menthol derivatives, for example, menthyl ester-based and menthyl carboxamide-based cooling compounds such as menthyl carboxamide, N-ethyl-p-menthane carboxamide, monomenthyl succinate, monomenthyl methyl succinate, monomenthyl glutarate, menthyl 2-pyrrolidone-5-carboxylate, monomenthyl 3-methyl maleate, menthyl acetate, menthyl lactate, menthyl salicylate, 2-isopropanyl-5-methylcyclohexanol, 3-L-menthoxypropane-1,2-diol, menthane, menthone, menthone ketals, menthone glycerol ketals, menthyl glutarate esters, N-ethyl-p-menthane-3-carboxamide (WS-3), or a combination thereof. Additional menthyl-based coolants, specifically menthyl carboxamides, are described in U.S. Patent No. 7,923,577 to Bardsley et al. Other physiological cooling agents that can be used in combination with, or in the absence of the menthyl-based coolants include, for example, 2-mercapto-cyclo-decanone, hydroxyl-carboxylic acids with 2 to 6 carbon atoms, alpha-dimethyl succinate, menthyl lactate, acyclic carboxamides such as N-2,3-trimethyl-2-isopropyl butanamide, and a combination thereof. Additional cooling agents include the 1-*tert*-butylcyclohexanecarboxamides described in U.S. Patent Application Publication Nos. US 2011/0070171 A1 and US 2011/0070329 A1 of Kazimierski et al.

Warming agents can be selected from a wide variety of compounds known to provide the sensory signal of warming to the consumer. These compounds offer the perceived sensation of warmth, particularly in the oral cavity, and often enhance the perception of flavors, sweeteners, and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, isopropyl alcohol, iso-amyl alcohol, benzyl alcohol, glycerine, and a combination thereof.

In some embodiments, a tingling sensation can be provided to the hard confectionary composition by the inclusion of a tingling agent. Tingling agents include jambu, and alkylamides extracted from materials such as jambu or sanshool.

The coloring agents used in the hard confectionary compositions are present in amounts effective to produce the desired color. These coloring agents include pigments, which can be incorporated in amounts up to about 6% by weight of the hard confectionary composition. An exemplary pigment, titanium dioxide, can be incorporated in amounts up to about 2% by weight, and specifically less than about 1% by weight of the hard confectionary composition. The colorants can also include natural food colors and dyes suitable for food, drug, and cosmetic applications. These colorants are known as FD&C dyes and lakes. The materials acceptable for the foregoing uses are specifically water-soluble. A full recitation of all FD&C. colorants and their corresponding chemical structures can be found in the Kirk-Othmer Encyclopedia of Chemical Technology, 3rd Edition, in volume 5 at pages 857-885.

Throat care or throat-soothing ingredients include analgesics, antihistamines, anesthetics, demulcents, mucolytics, expectorants, antitussive, and antiseptics. In some embodiments, the throat-soothing agents include those selected from honey, propolis, aloe vera, glycerine, menthol, or a combination thereof.

Medicaments for the treatment of a cough, or a cold or flu symptom include elements, compounds or materials, alone or in combination, that have been used for, or have been shown to be useful for, the amelioration of a symptom commonly associated with cough, colds, or influenza. It is to be understood that a "medicament for the treatment of a cough, or a cold or flu symptom" includes medicaments that are also useful for the treatment of cold-like or flu-like symptoms arising from other sources, such as, for example, allergies or adverse environmental conditions. Cold, cold-like, flu, and flu-like symptoms as used herein include, for example, cough, coryza, nasal congestion, upper respiratory infections, allergic rhinitis, otitis, sinusitis, sneezing, and the discomfort, pain, fever and general malaise associated with colds, flu, allergies, and adverse environmental conditions.

Examples of general categories of medicaments for the treatment of a cough, or a cold or flu symptom include antihistamines, decongestants (sympathomimetics), antitussives (cough suppressants), anti-inflammatories, homeopathic agents, expectorants, anesthetics, demulcents, analgesics, anticholinergics, throat-soothing agents, antibacterial agents, and antiviral agents. Some of these medicaments can serve more than one purpose. The pharmaceutically acceptable salts and prodrugs of the medicaments are also included unless specified otherwise. Two or more medicaments that have activity against the same or different symptoms of colds or coughs can be used together in a combination.

Any of the above-described components, but in particular the flavorants, high intensity sweeteners, acidulants, cooling agents, warming agents, and medicaments can contribute to the flavor profile of the various regions of the multisensory hard confectionary. Accordingly, the additional ingredients included in the hard confectionary composition are selected based upon the desired flavor profile of each region. In some embodiments, an aspect of the flavor profile of the inner region, the outer region, and the additional region does not significantly change to a degree detectable by the consumer during consumption. For example, a high intensity sweetener can be present in each region in amounts to provide effectively the same level of sweetness in each region. In other embodiments, an aspect of the flavor profile of the inner region, the outer region, and the optional additional region alters between the regions to a degree readily detected and appreciated by the consumer during consumptions. For convenience, the term "flavor composition" refers to those components of the composition in each region that contribute to the overall flavor profile of that region. Thus, the amount and type of each component present in the flavor composition of the outer region is selected to provide a first taste profile and the amount and type of each component present in the flavor composition of the inner region is selected to provide the third taste profile wherein the first and the third taste profile (and thus the flavoring compositions) are not the same. For example, where the outer region provides a cooling experience and the inner region provides a tingling experience, the flavor composition of the outer region includes a cooling agent and the flavor composition of the inner region includes a tingling agent.

In the multi-sensory, fruit-flavored hard confectionary, the flavor composition of the outer region comprises a fruit flavor and a cooling compound, and the flavor composition of the inner region comprises a fruit flavor with no, or substantially no, cooling compound. The first flavor profile of this multi-region, fruit-flavored hard confectionary is predominantly a cooling profile and the third flavor profile is predominantly a fruit profile.

In some embodiments, the cooling compound present in the flavor composition of the outer region is menthol, and no, or substantially no, cooling compound is present in the inner region. The total amount of menthol present in the outer region is 0.001% to 3.0% by weight, specifically 0.05% to 1.0% by weight, and more specifically 0.08% to 0.5% by weight, based on the total weight of the of the outer region. Alternatively, the flavor composition of the outer region comprises menthol, eucalyptus oil, or a combination of menthol or eucalyptus oil. In some embodiments, the flavor composition of the outer region comprises menthol, eucalyptus oil, or a combination of menthol and eucalyptus oil, and the flavor composition of the inner region comprises no, or substantially no cooling compound. The total amount of eucalyptus oil in the outer region of the multi-region, fruit-flavored hard confectionary can be 0.001% to 3.0% by weight, specifically 0.005 to 1.0%, more specifically 0.01% to 0.25% by weight, even more specifically 0.05% to 0.1% by weight, based on the total weight of the outer region. In some embodiments, a physiological cooling agent in present in the outer region alone or in combination with the above cooling agents.

In some embodiments, the fruit flavorant present in the flavor composition of the outer region is the same as the fruit flavor present in in the flavor composition the inner region. In other embodiments, the fruit flavor is the same in each region. The fruit flavorants are used in amounts effective to provide the desired level of flavor.

In some embodiments, neither the outer region nor the inner region includes a food acid. In another embodiment of the multi-sensory, fruit-flavored hard confectionary, the flavor composition of the outer region, the inner region, or both can further contain a food acid. While the presence of a food acid in the flavor composition of the inner region is optional, there are advantages to including a food acid as a component in the inner region of the multi-region, fruit-flavored hard confectionary. First, the combination of the acid with the fruit flavor enhances the fruit flavor(s) present in the inner region composition thereby resulting in an inner region having a more intense fruit flavor profile compared to the same combination offlavors alone without a food acid. Second, the acid acts to minimize the bitter aftertaste associated with the presence of menthol in either the outer region or the inner region of the multi-region fruit-flavored hard confectionary.

When a food acid is present, the weight ratio of the acid to the fruit flavor, particularly in the inner region, is at least 5:1. Specifically, the weight ratio of acid to fruit flavor, particularly in the inner region is 5:1 to 20:1, more specifically, 6.5:1 to 15:1, even more specifically, 7.5:1 to 12:1. The total amount of acid present in the inner region can be 0%, or 0.01% to 3% by weight, specifically, 0.01% to 1.5 % by weight, more specifically, 0.1 % to 1.0% by weight, based on the total weight of the inner region.

In some embodiments, the inner region contains a food acid and the outer region does not include a food acid. However, in other embodiments, a food acid can optionally be present in the outer region of the multi-sensory, fruit-flavored hard confectionary, in the above amounts. The shelf life of the hard confectionary can be extended by having an outer region that contains a reduced amount of the food acid. Thus, in the multi-sensory, fruit-flavored hard confectionary, the amount of acid present in the outer region can be 0% to 3% by weight, more specifically, 0.0001% to 1.5% by weight, even more specifically, 0.001% to 1.0% by weight, based on the total weight of the inner region.

Also disclosed herein but not presently claimed are non-fruit, multi-region hard confectionaries having no, or substantially no, fruit flavorants in any of the regions. Instead, the first and third flavor profiles arc provided by different types or amounts of sensory agents, e.g., a cooling agent and a warming agent, two different cooling agents, different amount of the same cooling agents, and the like.

For example, the outer region of the non-fruit, multi-region hard confectionary can comprise a cooling agent, e.g., menthol, and an optional food acid, wherein the food acid is present an amount of more than 0 to 60% by weight of the total amount of menthol in the outer region. The flavor composition of the inner region comprises a cooling agent, e.g., menthol, and optionally a food acid, wherein the amount of food acid is less than 20% by weight of the total amount of any food acid present in the outer region, including 0% by weight. The outer and inner regions are formulated so that the first flavor profile provides a cooling sensation and the second flavor profile provides a cooling sensation that is discernibly stronger to the consumer than the first flavor profile during consumption.

In the non-fruit multi-region confectionary, the amount of cooling agent, e.g., menthol, present in the outer region flavor composition and in the inner region flavor composition can be 30% to 70% by weight, specifically 35% to 65% percent by weight, more specifically 40 to 60% by weight, based on the weight of each flavor composition, respectively. In order to provide a relatively milder cooling sensation in the outer region, less cooling agent and/or more food acid is present in the flavor composition of the outer region. In some embodiments, the weight ratio of cooling agent, e.g., menthol, in the outer region to the cooling agent, e.g., menthol in the inner region is 1:3 to 1:1, more specifically 1:2.5 to 1:1. Of course, it is also possible to provide the opposite sequence of flavor profiles by reversing the ratios in each region.

In some embodiments, the outer region flavor composition and/or the inner region flavor composition further comprise eucalyptus oil. The total amount of eucalyptus oil present in the outer region or inner region of the non-fruit multi-region hard confectionary is 0% to 3.0% by weight, specifically 0.001% to 2.0% by weight, more specifically 0.005 to 1.0%, even more specifically 0.005% to 0.5% by weight, based on the total weight of either the outer region or the inner region, respectively. Again, in order to provide a relatively milder cooling sensation in the outer region, less eucalyptus oil and/or more food acid is present in the flavor composition of the outer region. In some embodiments, the weight ratio of eucalyptus oil in the outer region to the eucalyptus oil in the inner region is 1:3 to 1:1, more specifically 1:2.5 to 1:1.

When present, the total amount of food acid present in the flavor composition of the outer region of the non-fruit multi-region confectionary is calculated relative to the total amount of cooling agent, e.g., menthol in the outer region flavor composition, such that the amount of acid can be 0.01% to 60% by weight of the amount of cooling agent in the outer region. Specifically, the amount of acid can be 0.1% to 50% by weight, 1% to 40% by weight, 1% to 30% by weight, 1% to 20% by weight, or 1% to 10% by weight, based on the total weight of cooling agent, e.g., menthol, present in the outer region flavor composition. In some embodiments the outer region does not include any food acid.

When present, the total amount of food acid in the inner region is relative to the total amount of food acid present in the outer region, such that the amount of food acid is less than 50% by weight of the total amount of food acid present in the outer region. Specifically, the amount of acid can be 0.01% to 15% by weight, 0.01% to 10% by weight, 0.01 to 5% by weight, 0.01 to 2% by weight, or 0.01% to 1% by weight, based on the total amount of food acid present in the outer region. In some embodiments the inner region does not include any food acid. In particular, the outer region flavor composition includes a food acid, and the inner region flavor composition does not.

The amount of food acid present in the outer region can be 0% to 5% by weight, more specifically, 0.0001% to 1.5% by weight, even more specifically, 0.001% to 1.0% by weight, based on the total weight of the inner region. In some embodiments, the outer region composition does not include a food acid.

The amount of food acid present in the inner region can be 0% to 30% by weight, specifically 0.0001% to 10% by weight, more specifically 0.05 to 5% by weight, even more specifically 0.01% to 1.5% by weight, yet even more specifically, 0.1% to 1.0% by weight, based on the total weight of the inner region.

Preparation of the hard confectionaries involves mixing and heating the sugar, any sugar alcohols and/or any other carbohydrate bulking agents, and/or a diluent such as water, to form a melt; cooking the melt; removing excess moisture from the melt; cooling the melt with mixing until the melt is a plastic-like, workable mass; while the melt is a plastic-like hard confectionary mass, incorporating remaining additional ingredients; and forming the plastic-like mixture into hard confectionary compositions having the desired size and shape. The ingredients that make up the flavor composition can be added separately to the hard confectionary composition or can be combined prior to their addition to the confectionary mass.

In some embodiments, the hard confectionary compositions are prepared using conventional methods and equipment, such as fire cookers, vacuum cookers, orscraped-surface cookers (also referred to as high speed atmospheric cookers). When using a fire cooker, the desired quantity of carbohydrate bulking agent is dissolved in water by heating the agent in a kettle until the bulking agent dissolves. Additional bulking agent can then be added and cooking continued until a final temperature of, for example, 145°C to 156°C is achieved. The batch is then cooled and worked as a plastic-like hard confectionary mass to incorporate additives separately or in the form of one or more concentrates.

In vacuum cookers, a carbohydrate-bulking agent is boiled to 125° to 165°C, vacuum is applied, and additional water is boiled off without extra heating. When cooking is complete, the hard confectionary mass is a semi-solid and has a plastic-like consistency. At this point, additives, separately or in the form of one or more concentrates are admixed in the hard confectionary mass by routine mechanical mixing operations.

A high-speed atmospheric cooker uses a heat exchanger surface. A film of a hard confectionary composition is spread on a heat exchange surface, rapidly heated to a suitable temperature, for example 165° to 170°C, and then rapidly cooled, for example to 100° to 120°C. Additives, separately or in the form of one or more concentrates can then be worked into the plastic-like hard confectionary composition.

In the foregoing methods, the additional ingredients, e.g., flavorants, colorants, and any other additive(s), are mixed in the hard confectionary mass for a time effective to obtain a uniform distribution of the materials. For example, mixing times from about 10 seconds to about 10 minutes have been found to be effective. Once the hard confectionary mass has been properly tempered, it can be formed into the desired shapes using one or more of a variety of forming techniques depending upon the shape and size of the final product desired.

In some embodiments, the process of forming the hard confectionary compositions into a multi-region hard confectionary comprises methods such as rotary molding, chain molding, ball forming, or a combination of the foregoing processes.

Rotary and chain molding methods build successive layers of hard confectionary using a batch former e.g. batch roller. In the first step of the process, the plastic-like hard confectionary mass which is to become the core (e.g. inner) region of the multi-region hard confectionary, is fed into the batch roller and is formed into a long cylindrical shape. The plastic-like hard confectionary mass which is to comprise the outer region of the multi-region confectionary is then fed into the batch roller in the form of a rope or rectangular sheet. As the rope or rectangular sheet of the outer region is fed into the batch roller, it adheres to the hard confectionary composition of the inner (core) region and is wrapped around the cylindrically shaped core region as it rotates within the batch roller.

An alternate means for forming the hard confectionery composition into a multi-region hard confectionary can include a combination of extruder for the inner region and a batch process for the outer region. (Iws e.g. include alternative means for producing) Alternatively, the inner core can be formed via extrusion and the outer region through a batch process.

The outer region or inner region can be produced using either a batch or a continuous cooker.

The two hard confectionary masses are fed into the batch roller in separate locations using conveyors off of a multi-stream continuous cooker, or alternatively, by using a combination of continuous cookers having single or multi-stream capability. In another embodiment, the two hard confectionary masses are formed by using a series of batch cookers, or a combination of a batch cooker and a continuous cooker, and then hand feeding the successive layers via individual sheeters onto the batch roller. A more detailed description of rotary molding methods are described in US 4,938,128. Once the hard confectionary composition of the second (core) region has been coated with the hard confectionary composition of the first (outer) region, the resulting confectionary rope exits the batch roller. If so desired, the rope can be introduced, for example, into a rope sizer that further refines the shape of the rope to ensure a consistent diameter along the length of the rope.

The resulting product is a multi-region hard confectionary having at least two regions, each of which is formed of a hard confectionary composition.

The confectionary rope can then be formed into the final multi-region hard confectionary. For example, the confectionary rope can be cut into desired lengths and the resulting segments formed into the final desired shape. Processes including rotary molding, chain forming and ball forming can be used.

In general, chain or rotary molding processes include sequentially cutting the rope into segments of hard confectionery composition and depositing segments of the hard confectionary compositions into one or more of a plurality of molds in a molding machine having a mold conveyor which includes a pair of parallel chains and multiple molds fixed to and straddling the chains.

Ball forming processes include feeding the confectionary rope into a ball forming machine, cutting the rope into a segment having the desired length, and forming the segment into a "ball" or "sphere" shape.

Methods of forming confectionary having multiple regions via extrusion molding are known in the art. For example, a center-filled rope can be formed by introducing a filling composition into a shell composition by means of an extruder or any other suitable apparatus. The filled rope can then be sized and individual multi-region confectionary pieces can be formed by known means such as by chain die cutting, rotary cutting, or the like.

In some embodiments, the multi-region hard confectionary disclosed herein is not prepared using an extrusion molding processes.

Methods of forming center-filled hard confectionary using direct deposition methods are also known in the art. Such methods can include directly depositing the plastic-like hard confectionary compositions in a mold in an alternating manner effective to produce a multi-region hard confectionary in which an outer region substantially surrounds an inner region.

The foregoing and other embodiments are further illustrated by the following examples, which are not intended to limit the effective scope of the claims. All parts and percentages in the examples and throughout the specification and claims are by weight of the final composition unless otherwise specified.

Various combinations of elements of the foregoing description can also be used. In some embodiments, multi-region hard confectionary providing a multi-flavor experience, are provided which comprise 10 to 60% by weight of a colored inner region comprising a hard confectionary composition having a flavor profile; 40 to 90% by weight of an uncolored outer region comprising a hard confectionary composition having a flavor profile distinguishable from the flavor profile of the outer region during consumption of the confectionary; wherein the outer region substantially surrounds the inner region and is sufficiently transparent to provide visibility to the inner region; and wherein the thickness of the outer region and the volume of the inner region is configured to sequentially provide a transition from a first flavor profile to a second flavor profile to a third flavor profile, wherein the first flavor profile is provided by the composition of the outer region, the second flavor profile is provided by a combination of the compositions of the outer region and the inner region, and the third flavor profile is provided by the composition of the inner region.

### EXAMPLES

The hard confectionary compositions of Examples 5 and 6 are illustrative of the compositions used to manufacture the confectionery of the invention. The remaining examples are not in accordance with the claims. The following describes the general process for preparing the hard confectionary compositions.

The hard confectionary compositions can be prepared by combining sweeteners (e.g. bulk sweeteners) as well as a solvent (e.g. water) in a mixing vessel for 4 to 10 minutes to form a slurry. The slurry is heated to a temperature of 70°C to 120°C to dissolve any sweetener crystals or particles and form an aqueous solution. Once dissolved, the solution is heated at a temperature of 135°C to 165°C and vacuum is applied to cook the batch and boil off water until a residual moisture of less than 3% is achieved. The batch changes from a crystalline to an amorphous phase. The flavors are then admixed in the batch by mechanical mixing operations, along with any other optional additives (e.g., coloring agents).

The sucrose/glucose mixtures illustrated in the present Examples can be partially or completely replaced by hydrogenated isomaltulose (isomalt), maltitol, hydrogenated starch hydrolysate, or mixtures thereof.

The compositions were formed into a multi-region hard confectionary using batch rollers. The composition for the inner region was fed into a batch roller where the composition was formed into cylindrical shape in the form of a rope. The composition for the outer region composition was then continuously fed into the batch roller, where it adhered to and wrapped around the rope of the inner region. Individual confectionary pieces were then cut from the rope and shaped.

The final multi-region hard confectionary included 30% by weight of the inner region and 70% by weight of the outer region, based on the total weight of the confectionary.

### Examples 1-2: Non-fruit flavored, multi-region hard confectionaries

Compositions for forming the outer region and inner region of non-fruit flavored, multi-region hard confectionaries are shown in Tables 1 and 2.

**Table 1. Example 1 (mentholyptus to peppermint flavor profile).**

| Component | Outer region Composition (% by weight) | Inner region Composition (% by weight) |
|---|---|---|
| Sucrose | 45-65 | 45-65 |
| Glucose | 35-55 | 35-55 |
| Menthol | 0.19 | 0.21 |
| Eucalyptus | 0.08 | 0.07 |
| Physiological cooling agents | 0.1 | 0.015 |
| Citric acid | 0.079 | 0 |
| Peppermint | 0 | 0.21 |
| Color | 0 | 0.001-0.1% |
| Other flavors | 0-0.5 | 0-0.5 |
| Water | 0.5-5 | 0.5-5 |

**Table 2. Example 2 (weaker to stronger mentholyptus flavor profile)**

| Component | Outer region Composition (% by weight) | Inner region Composition (% by weight) |
|---|---|---|
| Sucrose | 45-65 | 45-65 |
| Glucose | 35-55 | 35-55 |
| Menthol | 0.19 | 0.55 |
| Eucalyptus | 0.08 | 0.21 |
| Physiological cooling agents | 0.1 | 0.04 |
| Citric acid | 0.079 | 0 |
| Color | 0-0.1% | 0.001-0.1% |
| Other flavors | 0-0.5 | 0-0.5 |
| Water | 0.5-5 | 0.5-5 |

As shown in Tables 1 and 2, the flavor compositions of the inner and outer regions are different, and are formulated to provide three different flavor profiles distinguishable by the consumer.

During consumption, Example 1 exhibits a transition from an first menthol/eucalyptus (mentholyptus) flavor profile from the outer region flavor composition, to a second flavor profile provided by a combination of the outer and inner region flavor compositions, to a third peppermint flavor profile provided by the inner region flavor composition. The third (peppermint) flavor profile delivers a clean, fresh taste that differs from the first mentholyptus flavor profile.

During consumption, the hard confectionary prepared from the compositions of Table 2 exhibits a first, relatively milder mentholyptus flavor profile, a second combination profile, and a third, more strongly cooling flavor profile provided by the inner region flavor composition. The absence of the food acid in the inner region of Example 2 minimizes any bitter taste, which is normally associated with the menthol. As a result, the inner region of the multi-region confectionary provides a final strong cooling flavor without a bitter aftertaste.

### Examples 3-4: Fruit flavored, multi-region hard confectionaries

The compositions used to manufacture the outer and inner regions of the fruit flavored, multi-region confectionaries were prepared by combining the components shown in Table 3.

**Table 3. Examples 3-4 (cooling cherry flavor to enhanced cherry flavor profile)**

| | Example 3 | | Example 4 | |
|---|---|---|---|---|
| Component | Outer region (% by weight) | Inner region (% by weight) | Outer region (% by weight) | Inner region (% by weight) |
| Sucrose | 45-65 | 45-65 | 45-65 | 45-65 |
| Glucose | 35-55 | 35-55 | 35-55 | 35-55 |
| Menthol | 0.2 | 0 | 0.2 | 0.04 |
| Eucalyptus | 0.045 | 0 | 0.045 | 0 |
| Physiological cooling agents | 0.02 | 0.02 | 0.02 | 0.02 |
| Cherry Flavor 1 | 0.056 | 0.056 | 0.056 | 0.023 |
| Cherry Flavor 2 | 0.0195 | 0.0195 | 0.195 | 0.069 |
| Sucralose | 0.035 | 0 | 0.035 | 0 |
| Acid (Citric acid) | 0 | 0.85 | 0 | 0.68 |
| Color | 0 | 0.001-0.1% | 0 | 0.001-0.1% |
| Other flavors | 0-0.5 | 0-0.5 | 0-0.5 | 0-0.5 |
| Water | 0.5-5 | 0.5-5 | 0.5-5 | 0.5-5 |

As shown in Table 3, the flavor compositions of the inner and outer regions are different, and are formulated to provide three different flavor profiles distinguishable by the consumer.

In Example 3, both outer and inner regions contain cherry flavor and a cooling agent. The outer region further contains menthol and eucalyptus. The inner region contains no menthol or eucalyptus, but does contain a food acid to enhance the cherry fruit flavor. During consumption, the cherry flavor was maintained throughout, as well as a cooling, refreshing sensation. The first flavor profile of the confectionary was a sweet cherry flavor, which transitioned to a slightly sour cherry flavor (the second flavor profile) and at the end, left a natural freshness with an accentuated fruit flavor in the mouth (the third flavor profile).

In Example 4, both outer and inner regions contain cherry flavor, but in different amounts. The outer region contains menthol, eucalyptus, a cooling agent, and no food acid. The inner region flavor composition has low level of menthol, a cooling agent, a food acid, and lower level of added cherry flavor. The first flavor profile of the confectionary was a sweet cherry flavor, which transitioned to a slightly sour cherry flavor (the second flavor profile) and at the end, left a natural freshness with an accentuated fruit flavor in the mouth (the third flavor profile).

### Examples 5-7. Fruit flavored, multi-region hard confectionaries

The compositions used to manufacture the outer and inner regions of the fruit flavored, multi-region confectionaries were prepared by combining the components shown in Table 4.

**Table 4. Examples 5-7 (cooling honey-lemon flavor to honey-lemon flavor profile)**

| Component | Exs. 5-7 Outer region (% by weight) | Ex. 5 Inner region (% by weight) | Ex. 6 Inner region (% by weight) | Ex. 7 Inner region (% by weight) |
|---|---|---|---|---|
| Sucrose | 45-65 | 45-65 | 45-65 | 45-65 |
| Glucose | 35-55 | 35-55 | 35-55 | 35-55 |
| Menthol | 0.26 | - | - | - |
| Eucalyptus Oil | 0.060 | - | - | - |
| Physiological cooling agents | 0.015 | - | - | - |
| Lemon Flavor 1 | 0.051 | 0.063 | 0.64 | - |
| Honey Flavor 1 | 0.010 | - | - | 0.102 |
| Honey flavor 2 | 0.054 | 0.054 | - | 0.065 |
| Honey flavor 3 | 0.751 | 0.751 | 0.751 | 0.751 |
| Sucralose | 0.045 | - | - | - |
| Citric Acid | - | 0.24 | 0.65 | 0.1 |
| Potassium citrate | - | 0.08 | 0.217 | 0.033 |
| Water | 0.5-5 | 0.5-5 | 0.5-5 | 0.5-5 |
| Beta carotene | - | 0.0293 | 0.0293 | 0.0293 |

As shown in Table 4, the flavor compositions of the inner and outer regions are different, and are formulated to provide three different flavor profiles distinguishable by the consumer.

In each of Example 5-7, the outer region provides a cooling sensation together with a honey-lemon flavor, and the inner region provides an absence of additional cooling, together with a honey-lemon (Example 5), lemon (Example 6) or honey (Example 7) flavor profile. The fruit flavor of the honey-lemon flavor or the lemon flavor in the inner region of Examples 5 and 6 is intensified by addition of a food acid. In addition, any bitter or off-tastes imparted by the cooling agents (or any other ingredients) are absent or significantly minimized by the third flavor profile, particularly in Examples 5 and 6.

As used herein, the term "hard confectionary" is inclusive of "hard-boiled confectionary," "hard candy," and "hard-boiled candy," all of which include confectionary compositions wherein the finished product water content is less than or equal to 5% by weight, for example confectionaries wherein the saccharide component(s) are heated to temperatures high enough to remove most of their moisture or wherein the stated the water contents are obtained without boiling the saccharide component(s). Hard confectionaries are intended to reside in the oral cavity for a period of time, dissolving while being consumed.

In general, the candies and compositions can alternatively comprise, consist of, or consist essentially of, any appropriate components herein disclosed. The invention can additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each. "Combination" is inclusive of blends, mixtures, and the like. Furthermore, the terms "first," "second," and the like, herein do not denote any quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. "Or" means "and/or." The term "a combination thereof" is inclusive of one or more combinations comprising the named elements optionally together with a like element not named.

Reference throughout the specification to "some embodiments", "other embodiments", "an embodiment," and so forth, means that a particular element (e.g., feature, structure, and/or characteristic) described in connection with the embodiment is included in an embodiment described herein, and can or cannot be present in other embodiments. In addition, it is to be understood that the described elements can be combined in any suitable manner in the various embodiments.

## Claims

1. A multi-region hard confectionary providing a multi-flavor experience, comprising, based on the total weight of the confectionary:
10 to 60% by weight of an inner region comprising a hard confectionary composition having a flavor profile;
40 to 90% by weight of an outer region comprising a hard confectionary composition having a flavor profile distinguishable from the flavor profile of the inner region during consumption of the confectionary; and
wherein the outer region fully surrounds the inner region; and
wherein the thickness of the outer region and the volume of the inner region are configured to sequentially provide a transition from a first flavor profile to a second flavor profile to a third flavor profile, wherein the first flavor profile is provided by the composition of the outer region, the second flavor profile is provided by a combination of the compositions of the outer region and the inner region, and the third flavor profile is provided by the composition of the inner region,
wherein the first flavor profile provides a mild fruit taste and a cooling sensory experience and the third flavor profile provides a more intense fruit taste and no additional cooling experience, and
wherein the outer region has a minimum thickness of at least 2.0mm, and the inner region has a minimum thickness of at least 5mm.

2. The multi-region hard confectionary of claim 1, wherein the inner region, the outer region or both is colored or uncolored.

3. The multi-region hard confectionery of any one of claims 1-2, further comprising an additional outermost region comprising a hard confectionary composition or an additional innermost region comprising a hard confectionary composition.

4. The multi-region hard confectionery of claim 3, wherein the composition of the additional outermost region provides a flavor profile that is different from or the same as the first, second, or third flavor profiles.

5. The multi-region hard confectionery of claim 3, wherein the composition of the additional innermost region provides a flavor profile that is different from or the same as the first, second, or third flavor profiles.

6. The multi-region hard confectionary of any one of claims 1-5, wherein the outer region is sufficiently transparent to provide visibility to the inner region.

7. The multi-region hard confectionary of any one of claims 1-6, wherein all outer surfaces of the inner region are in contact with the outer region to form an interface between the outer region and the inner region, wherein the interface is a visually distinct demarcation between the outer region and inner region.

8. The multi-region hard confectionary of any one of claims 1-7, further comprising 50% to 85% by weight of an additional outermost region comprising a hard confectionary composition, wherein the additional outermost region substantially surrounds the outer region and is substantially transparent.

9. The multi-region hard confectionary of any one of claims 1-8, further comprising 4% to 25% by weight of an additional innermost region comprising a hard confectionary composition, wherein the additional innermost region is disposed within the inner region, substantially surrounded by the inner region.

10. The multi-region hard confectionary of any one of claims 1-9, wherein the first flavor profile and the third flavor profile provides a fruit taste.

11. The multi-region hard confectionary of any one of claims 1-10, wherein:
the outer region composition comprises a fruit flavorant and a cooling compound in an amount effective to provide substantially a cooling experience; and
the inner region composition comprises fruit flavorant in an amount effective to provide substantially a fruit taste.

12. The multi-region hard confectionary of claim 11, wherein the cooling compound comprises menthol, eucalyptus, or a combination of menthol and eucalyptus.

13. The multi-region hard confectionary of any one of claims 11-12, wherein the inner region composition does not include menthol, eucalyptus or a combination of menthol and eucalyptus.

14. The multi-region hard confectionary of any one of claims 11-13, wherein the outer region does not include a food acid.

15. The multi-region hard confectionary of any one of claims 11-14, wherein the inner region composition comprises a food acid, wherein a weight ratio of the food acid to the fruit flavorant is at least 5:1.

16. The multi-region hard confectionary of any one of claims 11-15, wherein the inner region comprises a food acid in an amount of up to about 3% by weight based on the total weight of the inner region.

17. The multi-region hard confectionery of claim 15 or claim 16, wherein the amount of food acid in the outer region is lower than the amount of food acid in the inner region.

## Patentansprüche

1. Mehrbereichs-Hartkonfekt, das ein Mehrgeschmackserlebnis bereitstellt, umfassend, bezogen auf das Gesamtgewicht des Konfekts:
zu 10 bis 60 Gew.-% einen Innenbereich, der eine harte Süßwarenzusammensetzung mit einem Geschmacksprofil umfasst;
zu 40 bis 90 Gew.-% einen Außenbereich, umfassend eine harte Süßwarenzusammensetzung mit einem Geschmacksprofil, das von dem Geschmacksprofil des Innenbereichs während des Konsums der Süßware unterscheidbar ist; und
wobei der Außenbereich den Innenbereich vollständig umgibt; und
wobei die Dicke des Außenbereichs und das Volumen des Innenbereichs konfiguriert sind, um sequenziell einen Übergang von einem ersten Geschmacksprofil zu einem zweiten Geschmacksprofil zu einem dritten Geschmacksprofil bereitzustellen, wobei das erste Geschmacksprofil durch die Zusammensetzung des Außenbereichs bereitgestellt wird, das zweite Geschmacksprofil durch eine Kombination der Zusammensetzungen des Außenbereichs und des Innenbereichs bereitgestellt wird und das dritte Geschmacksprofil durch die Zusammensetzung des Innenbereichs bereitgestellt wird,
wobei das erste Geschmacksprofil einen milden Fruchtgeschmack und ein sensorisches Kühlerlebnis bereitstellt und das dritte Geschmacksprofil einen intensiveren Fruchtgeschmack und kein zusätzliches Kühlerlebnis bereitstellt, und
wobei der Außenbereich eine minimale Dicke von mindestens 2,0 mm aufweist und der Innenbereich eine minimale Dicke von mindestens 5 mm aufweist.

2. Mehrbereichs-Hartkonfekt nach Anspruch 1, wobei der Innenbereich, der Außenbereich oder beide gefärbt oder ungefärbt sind.

3. Mehrbereichs-Hartkonfekt nach einem der Ansprüche 1-2, ferner umfassend einen zusätzlichen äußersten Bereich, der eine Hartkonfektzusammensetzung umfasst, oder einen zusätzlichen innersten Bereich, der eine Hartkonfektzusammensetzung umfasst.

4. Mehrbereichs-Hartkonfekt nach Anspruch 3, wobei die Zusammensetzung des zusätzlichen äußersten Bereichs ein Geschmacksprofil bereitstellt, das sich von dem ersten, zweiten oder dritten Geschmacksprofil unterscheidet oder mit diesem übereinstimmt.

5. Mehrbereichs-Hartkonfekt nach Anspruch 3, wobei die Zusammensetzung des zusätzlichen innersten Bereichs ein Geschmacksprofil bereitstellt, das sich von dem ersten, zweiten oder dritten Geschmacksprofil unterscheidet oder mit diesem übereinstimmt.

6. Mehrbereichs-Hartkonfekt nach einem der Ansprüche 1-5, wobei der Außenbereich ausreichend transparent ist, um dem Innenbereich Sichtbarkeit zu verleihen.

7. Mehrbereichs-Hartkonfekt nach einem der Ansprüche 1-6, wobei alle Außenoberflächen des Innenbereichs mit dem Außenbereich in Kontakt stehen, um eine Grenzfläche zwischen dem Außenbereich und dem Innenbereich zu bilden, wobei die Grenzfläche eine visuell unterscheidbare Abgrenzung zwischen dem Außenbereich und dem Innenbereich ist.

8. Mehrbereichs-Hartkonfekt nach einem der Ansprüche 1-7, ferner umfassend zu 50 Gew.-% bis 85 Gew.-% einen zusätzlichen äußersten Bereich, der eine Hartkonfektzusammensetzung umfasst, wobei der zusätzliche äußerste Bereich den Außenbereich im Wesentlichen umgibt und im Wesentlichen transparent ist.

9. Mehrbereichs-Hartkonfekt nach einem der Ansprüche 1-8, ferner umfassend zu 4 Gew.-% bis 25 Gew.-% einen zusätzlichen innersten Bereich, der eine Hartkonfektzusammensetzung umfasst, wobei der zusätzliche innerste Bereich innerhalb des Innenbereichs angeordnet ist, im Wesentlichen von dem Innenbereich umgeben.

10. Mehrbereichs-Hartkonfekt nach einem der Ansprüche 1-9, wobei das erste Geschmacksprofil und das dritte Geschmacksprofil einen Fruchtgeschmack bereitstellen.

11. Mehrbereichs-Hartkonfekt nach einem der Ansprüche 1-10, wobei:
die Außenbereichszusammensetzung einen Fruchtgeschmacksstoff und eine kühlende Verbindung in einer Menge umfasst, die wirksam ist, um im Wesentlichen ein Kühlerlebnis bereitzustellen; und
die Innenbereichszusammensetzung Fruchtaroma in einer Menge umfasst, die wirksam ist, um im Wesentlichen einen Fruchtgeschmack bereitzustellen.

12. Mehrbereichs-Hartkonfekt nach Anspruch 11, wobei die kühlende Verbindung Menthol, Eukalyptus oder eine Kombination von Menthol und Eukalyptus umfasst.

13. Mehrbereichs-Hartkonfekt nach einem der Ansprüche 11-12, wobei die Innenbereichszusammensetzung nicht Menthol, Eukalyptus oder eine Kombination von Menthol und Eukalyptus enthält.

14. Hartkonfekt mit mehreren Bereichen nach einem der Ansprüche 11-13, wobei der Außenbereich keine Lebensmittelsäure enthält.

15. Mehrbereichs-Hartkonfekt nach einem der Ansprüche 11-14, wobei die Innenbereichszusammensetzung eine Lebensmittelsäure umfasst, wobei ein Gewichtsverhältnis der Lebensmittelsäure zu dem Fruchtaroma mindestens 5:1 beträgt.

16. Mehrbereichs-Hartkonfekt nach einem der Ansprüche 11-15, wobei der Innenbereich eine Lebensmittelsäure in einer Menge von bis zu etwa 3 Gew.-%, bezogen auf das Gesamtgewicht des Innenbereichs, umfasst.

17. Mehrbereichs-Hartkonfekt nach Anspruch 15 oder Anspruch 16, wobei die Menge an Lebensmittelsäure in dem Außenbereich geringer ist als die Menge an Lebensmittelsäure in dem Innenbereich.

## Revendications

1. Confiserie dure à régions multiples fournissant une expérience d'arômes multiples, comprenant, sur la base du poids total de la confiserie :
10 à 60 % en poids d'une région interne comprenant une composition de confiserie dure ayant un profil aromatique ;
40 à 90 % en poids d'une région externe comprenant une composition de confiserie dure ayant un profil aromatique distinctif par rapport au profil aromatique de la région interne pendant la consommation de la confiserie ; et
dans laquelle la région externe entoure complètement la région interne ; et
dans laquelle l'épaisseur de la région externe et le volume de la région interne sont configurés pour fournir séquentiellement une transition d'un premier profil aromatique à un deuxième profil aromatique à un troisième profil aromatique, dans laquelle le premier profil aromatique est fourni par la composition de la région externe, le deuxième profil aromatique est fourni par une combinaison des compositions de la région externe et de la région interne, et le troisième profil aromatique est fourni par la composition de la région interne,
dans laquelle le premier profil aromatique fournit un goût de fruit doux et une expérience sensorielle de refroidissement et le troisième profil aromatique fournit un goût de fruit plus intense et aucune expérience de refroidissement supplémentaire, et
dans laquelle la région externe a une épaisseur minimale d'au moins 2,0 mm, et la région interne a une épaisseur minimale d'au moins 5 mm.

2. Confiserie dure à régions multiples selon la revendication 1, dans laquelle la région interne, la région externe ou l'une et l'autre est colorée ou non colorée.

3. Confiserie dure à régions multiples selon l'une quelconque des revendications 1 à 2, comprenant en outre une région la plus externe supplémentaire comprenant une composition de confiserie dure ou une région la plus interne supplémentaire comprenant une composition de confiserie dure.

4. Confiserie dure à régions multiples selon la revendication 3, dans laquelle la composition de la région la plus externe supplémentaire fournit un profil aromatique qui est différent des ou le même que les premier, deuxième, ou troisième profils aromatiques.

5. Confiserie dure à régions multiples selon la revendication 3, dans laquelle la composition de la région la plus interne supplémentaire fournit un profil aromatique qui est différent des ou le même que les premier, deuxième, ou troisième profils aromatiques.

6. Confiserie dure à régions multiples selon l'une quelconque des revendications 1 à 5, dans laquelle la région externe est suffisamment transparente pour fournir une visibilité vers la région interne.

7. Confiserie dure à régions multiples selon l'une quelconque des revendications 1 à 6, dans laquelle toutes les surfaces externes de la région interne sont en contact avec la région externe pour former une interface entre la région externe et la région interne, dans laquelle l'interface est une démarcation visuellement distincte entre les région externe et région interne.

8. Confiserie dure à régions multiples selon l'une quelconque des revendications 1 à 7, comprenant en outre 50 % à 85 % en poids d'une région la plus externe supplémentaire comprenant une composition de confiserie dure, dans laquelle la région la plus externe supplémentaire entoure essentiellement la région externe et est essentiellement transparente.

9. Confiserie dure à régions multiples selon l'une quelconque des revendications 1 à 8, comprenant en outre 4 % à 25 % en poids d'une région la plus interne supplémentaire comprenant une composition de confiserie dure, dans laquelle la région la plus interne supplémentaire est disposée au sein de la région interne, essentiellement entourée par la région interne.

10. Confiserie dure à régions multiples selon l'une quelconque des revendications 1 à 9, dans laquelle le premier profil aromatique et le troisième profil aromatique fournit un goût de fruit.

11. Confiserie dure à régions multiples selon l'une quelconque des revendications 1 à 10, dans laquelle :
la composition de région externe comprend un arôme de fruit et un composé de refroidissement en une quantité efficace pour fournir sensiblement une expérience de refroidissement ; et
la composition de région interne comprend un arôme de fruit en une quantité efficace pour fournir sensiblement un goût de fruit.

12. Confiserie dure à régions multiples selon la revendication 11, dans laquelle le composé de refroidissement comprend du menthol, de l'eucalyptus, ou une combinaison de menthol et d'eucalyptus.

13. Confiserie dure à régions multiples selon l'une quelconque des revendications 11 à 12, dans laquelle la composition de région interne ne comporte pas de menthol, d'eucalyptus ou de combinaison de menthol et d'eucalyptus.

14. Confiserie dure à régions multiples selon l'une quelconque des revendications 11 à 13, dans laquelle la région externe ne comporte pas d'acide alimentaire.

15. Confiserie dure à régions multiples selon l'une quelconque des revendications 11 à 14, dans laquelle la composition de région interne comprend un acide alimentaire, dans laquelle un rapport pondéral de l'acide alimentaire à l'arôme de fruit vaut au moins 5:1.

16. Confiserie dure à régions multiples selon l'une quelconque des revendications 11 à 15, dans laquelle la région interne comprend un acide alimentaire en une quantité allant jusqu'à environ 3 % en poids sur la base du poids total de la région interne.

17. Confiserie dure à régions multiples selon la revendication 15 ou revendication 16, dans laquelle la quantité d'acide alimentaire dans la région externe est inférieure à la quantité d'acide alimentaire dans la région interne.
